# EUROPEAN PATENT SPECIFICATION

(11) **EP 1 912 403 B1**
(45) Date of publication and mention of the grant of the patent: **01.07.2009**
(21) Application number: 06291585.5
(22) Date of filing: 09.10.2006
(51) Int. Cl.: H04L 29/06

(54) **A method of providing data integrity for data traffic for a mobile terminal during handover**
Ein Verfahren zum Bereitstellen von Datenintegrität für Datenverkehr für eine mobile Vorrichtung während eines Handovers
Procédé pour assurer l'intégrité des données pour un trafic de données pour un dispositif mobile pendant un handover

(43) Date of publication of application: 16.04.2008
(73) Proprietor: Alcatel Lucent, 75008 Paris (FR)
(72) Inventor: Conte, Alberto, 75014 Paris (FR)
(74) Representative: Schmidt, Werner Karl

(56) References cited:
- WO-A-03/090488
- EUNSOO SHIM RICHARD D GITLIN COLUMBIA UNIVERSITY: "Fast Handoff Using Neighbor Information 00.txt" IETF STANDARD-WORKING-DRAFT, INTERNET ENGINEERING TASK FORCE, IETF, CH, November 2000 (2000-11), XP015035259 ISSN: 0000-0004

## Description

### Field of the invention

The invention relates to methods of providing data integrity for data traffic for a mobile terminal during handover. The invention also relates to computer program products that are adapted to perform the methods in accordance with the invention, to a network component, and to a foreign agent.

### Background and related art

The mobile internet protocol standard, also referred to as mobile-IP or as MIP, is an internet engineering taskforce (IETF) standard communications protocol which is designed to allow mobile device users to move from one network to another network while maintaining their permanent IP address. Mobile-IP is described in IETF RFC 3344.

In the mobile internet protocol standard, a mobile device is referred to as mobile node (MN). A mobile node is a node in an IP network that is able to change its access point to the internet by use of mobile IP. A mobile node keeps always his IP address (also referred to as primary IP address) and is able to communicate uninterruptedly to the internet as long as a connection is established. A mobile node must not necessarily be a laptop or a mobile terminal, a mobile node can for example also be an IP router, e.g., onboard of an airplane.

The home network of a mobile node corresponds to the network to which the mobile node is associated with according to his IP address. When the mobile node is located in the home network, then support via mobile-IP is not necessary.

A foreign network (also called visited network) is the actual network in which the mobile node resides when the mobile node is not located in the home network. In the foreign network, mobile-IP support of the mobile node is required. A foreign agent of a foreign network provides services to the mobile node when the mobile node is located in the corresponding foreign network. In view of the internet protocol, the so called care of address (COA) specifies the actual location of the mobile node.

The care of address can be hosted by the foreign agent. The care of address is then an IP address of the foreign agent. The care of address can also be hosted by the mobile terminal itself. The care of address is then co-located with the primary address of the mobile terminal. Therefore the care of address is also referred to as secondary IP address.

From an mobile internet protocol point of view, the care of address is the address by which the mobile node is addressable. The 'location' where the care of address is hosted is also denoted as point of attachment of the mobile terminal to the IP network. Thus, in the first case, where the care of address is hosted by the foreign agent, the foreign agent represents the point of attachment of the mobile terminal to the IP network. Further, in the case where the care of address is co-located with the primary IP address, the mobile terminal itself is the point of attachment to the IP network.

A home agent (HA) of the home network also provides services to the mobile terminal when the mobile terminal is located in the foreign network. Services that are provided to the mobile terminal are routed via the foreign agent to the mobile node. The home agent maintains a database in which the home agent keeps track of the care of addresses of the mobile nodes associated with the home agent (mobility binding). Thus, the database provides mappings of actual care of addresses of the mobile nodes to the primary IP addresses.

A correspondent node (CN) sends data packets (also referred to as IP-datagrams) to the primary IP address of the mobile node. The data packets are received by the home agent of the mobile terminal. The home agent is able to identify by use of the above mentioned database the care of address of the mobile node. The data packets are tunneled from the home agent to the foreign agent for the case when the care of address of the mobile node is hosted by the foreign agent. The above mentioned foreign agent is thus the end point and the home agent is the starting point of the tunnel. From a logical point of view, a tunnel is a secured channel for data packets between the starting and the end point. The tunneling of the IP-datagrams through the tunnel is carried out by encapsulation of the data and by then sending the encapsulated data over the tunnel to the tunnel end point. The IP-datagrams are de-capsulated at the end point of the tunnel.

If the care of address is co-located with the primary care of address, then the tunnel end point is represented by the mobile terminal itself. The home agent sends then the encapsulated IP-datagrams via the foreign agent directly to the mobile node, where the IP-datagrams are de-capsulated.

While it is widely accepted that the internet protocol provides no guarantee for packet delivery, there is a major interest in ensuring that mobile IP does not deteriorate the quality of service experienced by the user of the mobile terminal. However, the mobile internet protocol does not provide any means to guarantee the integrity of data in the event of a handover. A handover refers to the process of transferring an active connection of the mobile terminal from one foreign network to another foreign network. More particularly, a handover refers to the process of transferring the connection of a mobile terminal from one (serving) foreign agent to another (target) foreign agent. This transfer can be a switch of traffic from the serving to the target foreign agent or if so requested it may be solved by bicasting: that is the home agent forwards duplicate copies of traffic to both points of attachment. No provision is however made in mobile-IP to synchronize both data paths in order to not lose or duplicate any data during the handover of the mobile terminal.

WO 03/090488 A1 discloses methods and apparatus for improving tunneling techniques and reducing packet loss in mobile communications systems. A mobile node establishes multiple tunnels, representing downlinks, from the mobile node perspective. The different downlink tunnels are through different access nodes but terminate at the same home agent. Tunnels representing uplinks and downlinks are managed independently. Each of the uplink and downlink tunnels can have different lifetimes and can be created/removed independently allowing for flexibility in handoff operations.

The document: Eunsoo Shim Richard D Gitlin Columbia University: 'Fast handoff using neighbor information 00.txt', IETF standard working draft, internet engineering taskforce, IETF, CH, November 2000, XP015035259, discloses a handoff mechanism in wireless IP using neighboring foreign agent information. The handoff latency is minimized by initiating data forwarding to the possible new foreign agent candidates immediately when the mobile node is about to start the link layer handoff procedure. The proposal builds upon the mobile IP handoff procedure by adding a couple of additional message types. The handoff mechanism is a unified procedure for inter-and intra-domain handoffs and provides flexible choices to the network while maintaining transparency to the mobile node.

There is a need for an improved method of providing data integrity for data traffic for mobile terminal during handover of the mobile terminal from a serving foreign agent to another foreign agent. There is furthermore a need for an improved network component that provides data integrity for data traffic when the mobile terminal is handed over. There is also a need for an improved mobile terminal that can synchronize data packets received before and after a handover.

### Summary of the invention

In accordance with an embodiment of the invention, there is provided a method of providing data integrity for data traffic for a mobile terminal during handover of the mobile terminal from a first foreign network to a second foreign network, wherein the data traffic is sent by a home agent of a home network. The home network, and the first and second foreign networks are connected with each other by an IP-based network. The home agent is associated with the mobile terminal and the method comprises the step of detecting the handover of the mobile terminal from the first foreign network to the second foreign network. In response to the detection of the handover, a first message is sent to a first foreign agent hosted by the first foreign network. The first message indicates to the first agent that further data packets of the data traffic will be sent to the second foreign agent. The first message is further routed by the first foreign agent to the second foreign agent. Furthermore, further data packets of the data traffic will be sent to the second foreign agent.

As a result of the handover, the mobile terminal gets attached to the second foreign network and until the home agent is notified of the new location the data traffic needs to be forwarded via a specific tunnel from the first foreign network to the second foreign network in order to reach the terminal. Eventually, the home agent is notified by the mobile terminal via a MIP registration of the readiness of the mobile terminal to receive traffic via the second point of attachment which relates to the second foreign agent. At this point the home agent starts sending traffic to the second point of attachment directly by use of the care of address associated as described in the introduction to the second point of attachment. The home agent may not stop sending traffic to the first foreign agent associated with the first point of attachment if the mobile terminal requested the usage of the bicasting option. Then, the second foreign network would receive two exact copies of the data traffic with only one difference: the one sent to the first foreign network is addressed to the first point of attachment while the one sent to the second foreign network is addressed to the second point of attachment. The second foreign network shall only forward one of the data flows to the terminal. The reception of the first message allows the second foreign network to switch the traffic being forwarded to the terminal from the flow received from the first foreign network to the flow received directly from the home agent.

Furthermore, if the mobile internet protocol client of the mobile terminal had selected the bicasting option, it sends to the home agent a request to release its binding through the first point of attachment for this terminal, when it detects that the received traffic has already been switched to the second point of attachment relating to the second foreign agent. In a further step, the home agent receives the request and releases the tunnel that is established between the home agent and the first point of attachment via the first foreign agent.

In accordance with an embodiment of the invention, the first message is a control message to be implemented in the mobile internet protocol.

In accordance with an embodiment of the invention, the second message is a control message that can also be implemented in the mobile internet protocol. The first message and the second message can therefore be control messages that are provided by the mobile internet protocol and that are exchanged between the home agent and the first point of attachment and between the second and first foreign networks in order to communicate that no further data traffic will be sent to the first point of attachment and in order to indicate that the tunnel between both foreign networks can be released, respectively. Messages that are implemented in the protocol as control messages are also referred to as out-band messages.

In accordance with an embodiment of the invention, the first message can also be encapsulated in every data packet sent from the home agent to the first point of attachment after the home agent receives the request to send traffic to the second point of attachment. The first message can therefore be a so-called in-band message as the information comprised in the first message is carried by one data packet. The first message can therefore be for example a flag in the encapsulation header around a normal data packet. This however implies the need for a tunneling protocol that can be added with this information. This is the case for example for the generic routing encapsulation (GRE) protocol as defined by RFC 1701. Usage of a first message encapsulated in a data packet provides the advantage that when used traffic is flowing through there is no need to insert an additional control plane message as is the case, when the first message is an out-band message. On the other hand however, when the first message is an out-band message, there is no need for downstream traffic to convey this information.

In accordance with an embodiment of the invention, the data traffic comprises a plurality of data streams, wherein each data stream of the plurality of data streams relates to a specific service provided to the mobile terminal, wherein a first message is sent for each data stream, wherein each of the first messages indicates that no further data packets of the corresponding data stream will be sent to the first point of attachment. This provides the advantage that synchronization in the second foreign network of the data packets received before the handover aimed to the first point of attachment and after the handover aimed to the second point of attachment can be done for each service independently. This ensures that a certain quality of service for each service is provided to the user of the mobile terminal even during the handover.

In accordance with an embodiment of the invention, the first foreign agent links the mobile terminal to the home agent prior to the handover, and wherein the second foreign agent links the mobile terminal to the home agent after the handover.

As already mentioned in the introductory part of this document, the points of attachment relate to the care of addresses of the mobile terminal and can therefore be hosted either by the first and second foreign agents or by the mobile terminal.

In accordance with an embodiment of the invention, the first foreign network comprises means for receiving a second message from the second foreign network wherein the second message indicates that the first message has been received by the first point of attachment and means for releasing the connection between both of them.

In a second aspect, the invention relates to a computer program product which comprises computer executable instructions. The instructions are adapted to perform steps of the above described method in accordance with the invention.

In a further aspect, the invention relates to a network component for providing data integrity for data traffic destined for a mobile terminal while the mobile terminal is handed over from a first foreign network to a second foreign network. The mobile terminal is associated with a home network. The home network, the first, and the second foreign network are linked with each other, e.g., via IP-based connections over the (public) internet. The network component is comprised in the home network and has means for detecting the handover of the mobile terminal from the first foreign network to the second foreign network. The network component has furthermore means for sending a first message to a first foreign agent in response to the detection of the handover. The first foreign agent is hosted by the first foreign network and the first message indicates to the first foreign agent that further data packets of the data traffic are to be sent to the second foreign network. The network component has also means for sending further data packets of the data traffic to the second foreign network.

In another aspect, the invention relates to a mobile terminal comprising means for signaling to a home agent of an internet protocol network that a handover of the mobile terminal from a first point of attachment to a second point of attachment of the mobile terminal to the internet protocol network is scheduled, wherein the home agent provides data packets of data traffic via the first point of attachment to the mobile terminal. The first point of attachment is thereby associated with the first foreign agent and the second point of attachment is associated with the second foreign agent as when the mobile terminal is attached to the first foreign network, the data traffic is routed via the first foreign agent and when the mobile terminal is attached to the second foreign network, the data traffic is routed via the second foreign agent to the mobile terminal

In a further aspect, the invention relates to a method of providing data integrity for data traffic destined for a mobile terminal during handover of the mobile terminal from a first foreign network to a second foreign network. The mobile terminal is associated with a home network. The home network and the first and second foreign networks are linked with each other, e.g., over the public internet or over the private network of a telecommunications service provider. The method in accordance with the invention comprises the step of signaling the handover from the first foreign network to the second foreign network to a home agent located in the home network, and the step of receiving a first message from the home agent in response to the signalization of the handover, wherein the first message indicates to a first foreign agent that further data packets of the data traffic are to a second foreign agent. The first foreign agent is thereby hosted by the first foreign network and the second foreign agent is hosted by the second foreign network and both comprise means to establish a tunnel, wherein the tunnel is used for tunneling data packets of the data traffic from the first foreign agent to the second foreign agent. Data packets received via the first foreign agent before the handover and further data packets aimed directly to the second foreign agent are then synchronized when received at the second foreign agent. The method in accordance with the invention provides the advantage that even during the handover phase, the data packets destined for the mobile terminal can be synchronized. This ensures that a service with a certain quality can be provided to the user of the mobile terminal even during a handover.

In accordance with an embodiment of the invention, the method further comprises the step of sending a second message from the second foreign network to the first foreign network, wherein the second message indicates that the first message has been received and the tunnel established between them can be released. The first foreign agent is thus informed by the second foreign agent that the second foreign agent does not expect further data destined for the mobile terminal from the first foreign network. Network resources of the first network reserved so far for the mobile terminal can therefore be made available to other terminals which are still served by the first foreign network.

In a further aspect, the invention relates to a computer program product which comprises computer executable instructions. The instructions are adapted to perform steps of the above described method in accordance with the invention.

Furthermore, the invention relates to a second foreign agent for providing data integrity for data traffic for a mobile terminal during handover of the mobile terminal from a first foreign network to a second foreign network. The mobile terminal is associated with a home network. The home network and the first and second foreign networks are linked with each other. The second foreign agent is hosted by the second foreign network which comprises means for receiving data packets of data traffic from the first foreign network. The data packets have been sent by the home agent to the first foreign network before the mobile terminal has been handed over from the first foreign network to the second foreign network. Furthermore, the second foreign agent comprises means for receiving further data packets of the data traffic from the home agent and means for receiving a first message from a first foreign agent of the first foreign network. The first message is sent by the home agent to the first foreign agent and the first message indicates to the first foreign agent that further data packets of the data traffic will be sent to the second foreign agent. The second foreign agent has means for using the first message as a trigger to synchronize the data packets received via the first foreign network and the data packets received from the home agent.

### Brief description of the drawings

In the following preferred embodiments of the invention will be described in greater detail by way of example only making reference to the drawings in which:
- Figure 1: shows a block diagram of an IP network serving a mobile terminal,
- Figure 2: depicts a flow diagram illustrating basic steps performed by a method in accordance with the invention, and
- Figure 3: shows another block diagram of an IP network serving a mobile terminal.

### Detailed description

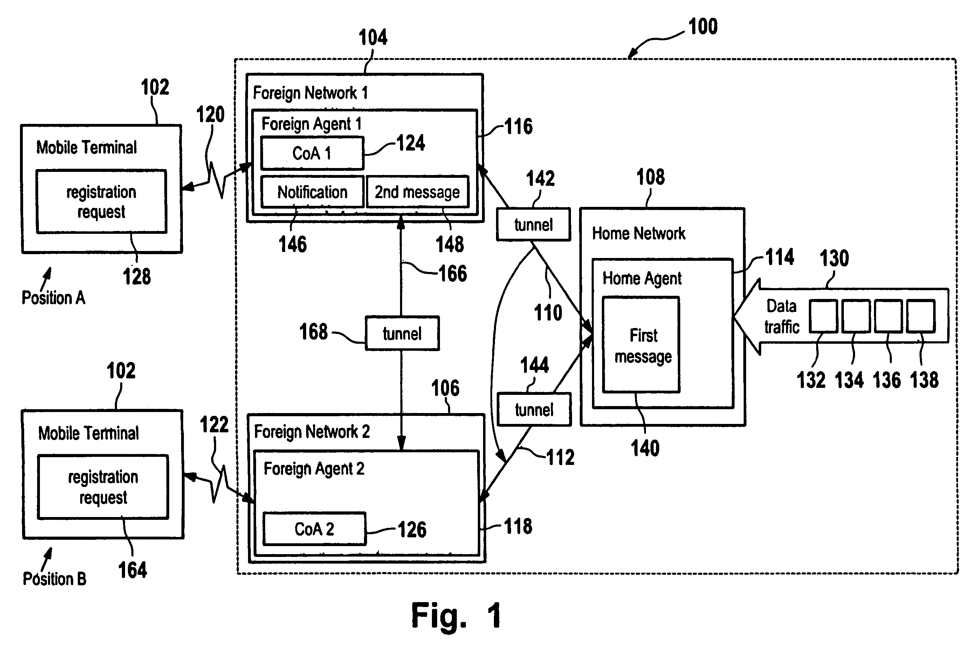

Fig. 1 shows a block diagram of an internet protocol (IP) network 100 serving a mobile terminal 102. The IP network 100 comprises a first foreign network 104, a second foreign network 106, and a home network 108. The first foreign network 104, the second foreign network 106 and the home network 108 are networks based on IP that are linked over, e.g., the internet. The first foreign network 104 is therefore linked to the home network 108 via connection 110, and the second foreign network 106 is connected with the home network 108 via connection 112. A connection 166 links the first foreign network 104 to the second foreign network 106. The connections 110, 112, and 166 may be connections over the internet or over private operator backbones.

The home network 108 comprises a home agent 114. The home agent 114 is typically coupled to a router (not shown in fig. 1) that links the home network 108 to other networks, such as the foreign networks 104 and 106. Each of the first and second foreign networks 104, 106 comprise a first foreign agent 116 and a second foreign agent 118, respectively. The foreign agents 116 or 118 are typically coupled to or hosted by routers that connect the corresponding networks 104 and 106 to other networks, such as the home network 108.

The mobile terminal 102 is associated with the home network 108 as the mobile terminal's primary IP address relates to the home network 108.

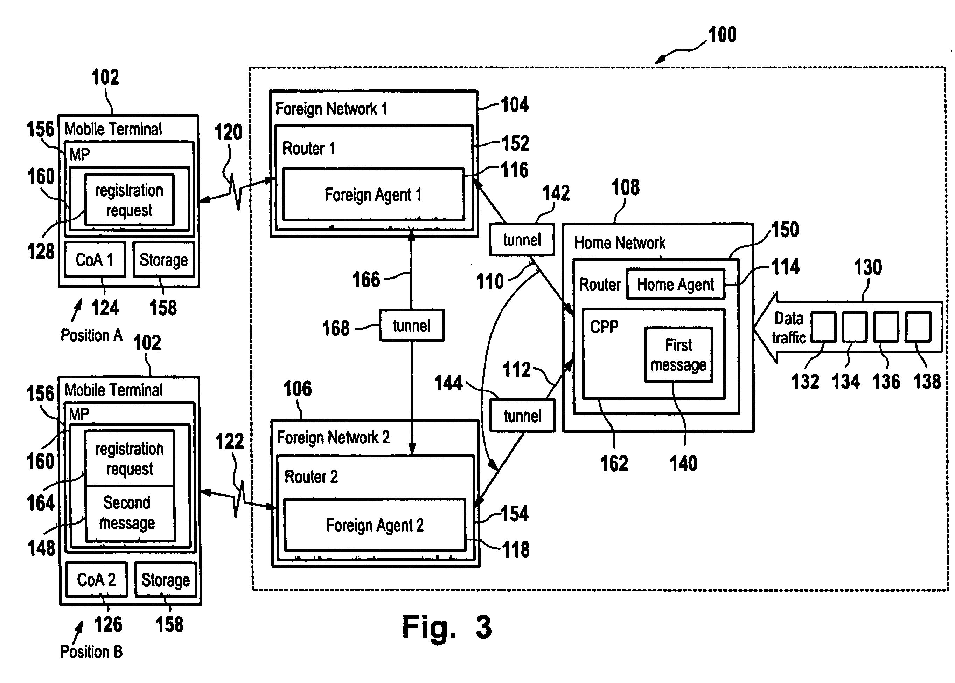

Initially, the mobile terminal 102 is assumed to be located at position A. Position A corresponds to a location from where the foreign network 104 can be accessed by a connection 120 which can, e.g., be a wireless connection. When the mobile terminal 102 connects via the connection 120 to the foreign network 104 by use of MIP, the foreign agent 116 assigns a first care of address (COA) 124 to the mobile terminal 102. The care of address 124 can be hosted by the foreign agent 116. Then, the foreign agent 116 corresponds to the point of attachment of the mobile terminal 102 to the IP network 100. The other possible scenario, when the care of address is hosted by the mobile terminal 102, is addressed in fig. 3.

After the mobile terminal 102 has received the care of address 124, the mobile terminal 102 sends a registration request 128 via the connection 120, the foreign network 104, and the connection 110 to the home network 108. The home agent 114 receives the registration request 128. The registration request 128 comprises the care of address 124. The home agent 114 therefore obtains knowledge about the actual care of address of the mobile terminal 102 and stores the care of address 124 along with the primary IP address of the mobile terminal in a database (mobility binding in accordance with MIP).

A correspondent node (not shown in fig. 1) sends data traffic 130 comprising data packets 132, 134, 136, and 138 to the mobile terminal 102 by use of the mobile terminal's primary IP address. The data traffic 130 is intercepted by the home agent 114 which can identify by use of the above mentioned database the actual care of address 124 of the mobile terminal 102. The data packets are then tunneled by use of a tunnel 142 to the point of attachment of the mobile terminal 102. Thus the data packets are tunneled to the foreign agent 116 from where they are further processed to the mobile terminal 102.

Assuming that the mobile terminal 102 moves during an active connection established with the IP network 100 from position A to position B which corresponds to a location where access to the IP network 100 is possible via the foreign network 106. Then, the active connection of the mobile terminal 102 is handed over from the foreign network 104 to the foreign network 106. During the handover phase, the mobile terminal 102 and the second foreign network 106 establish a (wireless) connection 122 with each other, while the connection 120 is dropped. Furthermore, the first foreign agent 116 establishes a tunnel 166 with the second foreign agent 118 so that traffic received from the home agent addressed to the care of address 124 of the mobile terminal 102 can be correctly redirected for delivery over the connection 122

The second foreign agent 118 assigns during the handover phase of the mobile terminal 102 a second care of address 126 to the mobile terminal 102. The second care of address 126 is in the scenario described here hosted by the foreign agent 118 which therefore represents the second point of attachment of the mobile terminal to the network 100. The other possible scenario, when the care of address is hosted by the mobile terminal 102, is addressed in fig. 3. The mobile terminal 102 sends then again a registration request 164 to the home agent 114, whereby the second care of address 126 is registered at the home agent 114.

Due to the reception of the registration request 164, the home agent 114 detects that the mobile terminal 102 has been handed over from foreign agent 116 to foreign agent 118. The home agent 114 sends then a first message 140 to the foreign agent 116 which indicates that further data packets of the data traffic 130 are sent to the second care of address 126. A notification 146 relating to the first message 140 is further processed by use of the tunnel 168 via connection 166 from the first foreign agent 116 to the second foreign agent 118. The notification 146 is finally received by the second foreign agent 118. Alternatively, the first message 140 can further be routed to the second foreign agent 118 together with the rest of the traffic addressed to mobile terminal 102.

Further data packets, e.g., data packets 136 and 138 which are intercepted by the home agent 114 after the first message 140 has been sent, are further routed via a tunnel 144 to the second point of attachment which corresponds to the foreign agent 118.

As a result of the handover, the mobile terminal looses connectivity with the first point of attachment. Data packets that still arrive at the first foreign network 104 need to be forwarded to the second point of attachment. That is, the data packets 132 and 134 which might have been sent by the home agent 114 to the foreign agent 116 before the first message 140 and which might have been received by the first foreign agent 116 after the connection 120 has been dropped are further sent via tunnel 168 to the second foreign network 106.

If a MIP client in the mobile terminal requested the usage of the bicasting option in the second registration request, data packets 136 and 138 are also sent to the first point of attachment via the first foreign agent 116 and further forwarded to the second foreign network 106 via the tunnel 118. In this case, when the second foreign network 106 receives the first message 140 or the notification 146 it sends a second message 148 back to the first foreign agent 116 indicating that the relocation of foreign agent can be considered finished and that the first foreign agent 116 can stop forwarding traffic over tunnel 168. The second foreign network 106 may send this second message immediately or may prefer to wait until it actually receives traffic from the home agent 114 via the tunnel 144. The binding of the first point of attachment 124 to the home agent is released when the MIP client sends a release request message to the home agent. The trigger for this message is the moment when the traffic sent by the second foreign network switches from the first point of attachment 124 to the second point of attachment 126.

Based on the reception of the notification 146, the second foreign network 106 is able to synchronize the last data packets 132, 134 received from the first foreign agent 116 with the first data packets 136, 138 received via connection 112 from the home agent 114. This is particularly advantageous as data packets processed directly from the home agent 108 to the foreign network 106 might arrive before the last data packets are processed via foreign network 104 to the second foreign agent 118.

The second foreign network 106 is therefore able to synchronize the data packets of the data traffic 130 and process the synchronized, ordered data traffic 130 further to the mobile station 102. This ensures that integrity of the data traffic 130 is preserved even during the handover of the mobile terminal 102 from the first foreign network 104 to the second foreign network 106. Furthermore, any loss of data is prevented as all data received by the first foreign agent 116 is further processed via the tunnel 168 to the second foreign network 106 which serves the mobile terminal 102 after the handover.

The first message 140 can be a control message implemented in MIP. The first message 140 can also be a message that is added to a packet, for example to data packet 134, which is according to the above given example the last data packet sent to the foreign agent 116. The same holds for the notification 146.

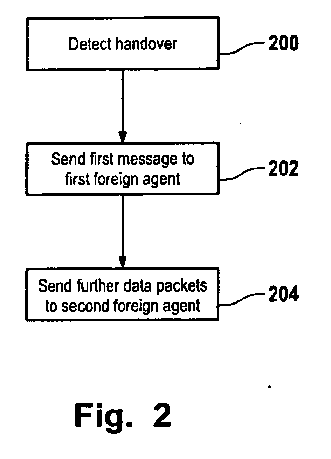

Fig. 2 shows a flow diagram illustrating the basic steps of a method of providing data integrity for data traffic destined for a mobile terminal during handover of the mobile terminal from a first foreign network to a second foreign network. The mobile terminal is associated with a home network and the home network and the first and second foreign networks are linked with each other. In step 200, the home agent detects the handover of the mobile terminal from the first foreign network to the second foreign network. In step 202 a first message is sent from the home agent to a first foreign agent in response to the detection of the handover. The first foreign agent is hosted by the first foreign network and the first message indicates to the first foreign agent that further data packets of the data traffic will be sent to a second foreign agent of the second foreign network. The first message is further routed by the first foreign agent to the second foreign agent. The home agent sends then according to step 204 further data packets of the data traffic to the second foreign agent.

Fig. 3 shows a block diagram of an internet protocol (IP) network 100 serving a mobile terminal 102. In the Fig. 1 and Fig. 3, identical reference numerals are used in order to indicate corresponding components, messages, and so one.

The IP network 100 comprises a first foreign network 104, a second foreign network 106, and a home network 108. The first foreign network 104, the second foreign network 106 and the home network 108 are networks based on IP that are linked over, e.g., the internet. The first foreign network 104 is therefore linked to the home network 108 via connection 110, and the second foreign network 106 is connected with the home network 108 via connection 112. A connection 166 links the first foreign network 104 to the second foreign network 106, The connections 110, 112, and 166 are, e.g., connections over the internet.

The home network 108 comprises a home agent 114. The home agent 114 is hosted by a router 150. The router 150 links the home network 108 to other networks, such as the foreign networks 104 and 106. The first and second foreign networks 104, 106 comprise a foreign agent 116 and a second foreign agent 118, respectively. The foreign agents 116 and 118 are typically hosted by routers 152 and 154, respectively, that connect the corresponding networks 104 and 106 to other networks, such as the home network 108.

The mobile terminal 102 is associated with the home network 108 as the mobile terminal's primary IP address relates to the home network 108. The mobile terminal 102 comprises a microprocessor 156 and a storage 158. The microprocessor executes a computer program product 160 which is stored on the storage 158 and loaded during the start-up of the mobile terminal 102 into the microprocessor.

Initially, the mobile terminal 102 is assumed to be located at position A. Position A corresponds to a location from which the foreign network 104 can be accessed by a connection 120 which can, e.g., be a wireless connection. When the mobile terminal 102 connects via the connection 120 to the foreign network 104 by use of MIP, the foreign agent 116 assigns a first care of address (COA) 124 to the mobile terminal 102. The care of address 124 is hosted by the mobile terminal 102. The mobile terminal itself represents therefore the point of attachment of the mobile terminal 102 to the IP network 100.

After the mobile terminal 102 has received the care of address 124, the computer program product 160 generates a registration request 128 which is sent by the mobile terminal 102 via the connection 120, the foreign network 104, and the connection 110 to the home network 108. The home agent 114 receives the registration request 128. The registration request 128 comprises the care of address 124. The home agent 114 therefore obtains knowledge about the actual care of address 124 of the mobile terminal 102 and stores the care of address 124 along with the primary IP address of the mobile terminal in a database.

A correspondent node (not shown in fig. 3) sends data traffic 130 comprising data packets 132, 134, 136, and 138 to the mobile terminal 102 by use of the mobile terminal's primary IP address. The data traffic 130 is intercepted by the home agent 114 which can identify by use of the above mentioned database the actual care of address 124 of the mobile terminal 102. The data packets are then tunneled by use of a tunnel 142 to the point of attachment of the mobile terminal 102.

Assuming that the mobile terminal 102 moves during an active connection established with the IP network 100 from position A to position B which corresponds to a location where access to the IP network 100 is possible via the foreign network 106. Then, the active connection of the mobile terminal 102 is handed over from the foreign network 104 to the foreign network 106. During the handover phase, the mobile terminal 102 and the second foreign network 106 establish a (wireless) connection 122 with each other, while the connection 120 is dropped.

The foreign agent 118 assigns during the handover phase of the mobile terminal 102 a second care of address 126 to the mobile terminal 102. The second care of address 126 is hosted by the mobile terminal 102 itself which therefore represents the second point of attachment. The mobile terminal 102 sends then again a registration request 164 to the home agent 114, whereby the second care of address 126 is registered at the home agent 114.

Due to the reception of the registration request 164, the home agent 114 detects that the mobile terminal 102 has been handed over from foreign agent 116 to foreign agent 118. The router 150 of the home agent 114 executes a computer program product 162 that is permanently stored on a storage device linked to the router 150 and loaded into the router 150 at the start-up of the router 150. The computer program product 162 generates a first message 140 which is sent to the first foreign agent 116. The first message 140 indicates that further data packets of the data traffic 130 will be sent to the second point of attachment. The first foreign agent 116 relays this first message 140 to the second foreign network 106 from where it is further processed to the mobile terminal 102.

Further data packets, e.g., data packets 136 and 138 which are intercepted by the home agent 114 after the first message has been sent, are further routed via a tunnel 144 to the mobile terminal 102. If the MIP client requested the usage of bicasting in the second registration 164, packets 136 and 138 will also be sent to the first point of attachment 124

The mobile terminal 102 sends in response to the reception of the first message 140 a second message 148 to the first foreign agent indicating that it can stop the forwarding of data traffic over connection 166. Furthermore, the mobile terminal 102 is due to the reception of the first message 140 able to synchronize the last data packets received before the handover and the first data packets received after the handover. This is particularly advantageous as data packets processed via the foreign network 106 might arrive before the last data packets are processed via foreign network 104 which are processed after the handover via connection 166 by use of a tunnel 168 from the first foreign agent 116. Moreover, this ensures that the data integrity is preserved even during the handover of the mobile terminal 102 from the foreign network 104 to the foreign network 106. The employment of the tunnel 168 in the connection 166 ensures that all data packets sent via foreign network 104 arrive at the mobile terminal even if the mobile terminal is served in the mean time by foreign network 106. Thus, loss of data is prevented.

The first message 140 as well as the second message 148 can be control messages implemented in MIP. The first message 140 can also be a message that is added to a packet, for example to data packet 134, which is according to the above given example the last data packet sent to the foreign agent 116. In the case of bicasting and if the first message 140 is added to a data packet, it can in fact be added to all data packets that are bicasted via the first point of attachment.

### List of Reference Numerals

| | |
|---|---|
| 100 | IP network |
| 102 | Mobile terminal |
| 104 | Foreign network |
| 106 | Foreign network |
| 108 | Home network |
| 110 | Connection |
| 112 | Connection |
| 114 | Home agent |
| 116 | Foreign agent |
| 118 | Foreign agent |
| 120 | Connection |
| 122 | Connection |
| 124 | Care of address |
| 126 | Care of address |
| 128 | Registration request |
| 130 | Data traffic |
| 132 | Data packet |
| 134 | Data packet |
| 136 | Data packet |
| 138 | Data packet |
| 140 | First message |
| 142 | Tunnel |
| 144 | Tunnel |
| 146 | Notification |
| 148 | Second message |
| 150 | Router |
| 152 | Router |
| 154 | Router |
| 156 | Microprocessor |
| 158 | Storage |
| 160 | Computer program product |
| 162 | Computer program product |
| 164 | Registration request |
| 166 | Connection |
| 168 | Tunnel |

## Claims

1. A method of providing data integrity for data traffic (130) for a mobile terminal (102) during handover of the mobile terminal from a first foreign network (104) to a second foreign network (106), the data traffic comprising a plurality of data streams, each data stream of the plurality of data streams relating to a specific service provided to the mobile terminal, said mobile terminal being associated with a home agent (114) of a home network (108), said home network and said first and second foreign networks being linked with each other, said home agent being adapted to perform the method, said method comprising:
- detecting the handover of the mobile terminal;
- sending a first message (140) for each data stream of the plurality of data streams from said home agent to a first foreign agent (116) in response to the detection of the handover, said first foreign agent being hosted by the first foreign network, said first message indicating to the first foreign agent that further data packets (132,...,138) of the corresponding data stream of the plurality of data streams in the data traffic will be sent to a second foreign agent of the second foreign network, said first message (140) being further routed by the first foreign agent to the second foreign agent, the first foreign agent establishing a tunnel for tunneling received data packets of the data streams to the second foreign agent;
- sending further data packets (136, 138) of the data traffic to the second foreign agent, the second foreign agent synchronizing data packets of the data streams received through the tunnel from the first foreign agent and data packets of the data streams aimed directly at the second foreign agent for each service independently ensuring that a certain quality of service is provided for each service to the mobile terminal during the handover.

2. The method of claim 1, wherein a registration request (164) from the mobile terminal is received by the home agent (114), wherein the registration request indicates to the home agent that the mobile terminal is linked to the said network via the second foreign network, and wherein the handover is detected due to the reception of the registration request.

3. The method of claim 1, wherein the method further comprises:
- receiving a second message from the second foreign network (106), said second message indicating that the first message has been received;
- releasing a tunnel (168) between the second foreign network and the first foreign network (104), wherein the tunnel is established for sending data traffic (130) from the first foreign network to the second foreign network (106).

4. The method of claim 1, wherein the first message (140) is a control message implemented in the mobile internet protocol.

5. The method of claim 1, wherein the first message is an in-band message or wherein the first message is an out-band message.

6. A computer program product for providing data integrity for data traffic (130) for a mobile terminal (102) during handover of the mobile terminal from a first foreign network (104) to a second foreign network (106), the data traffic comprising a plurality of data streams, each data stream of the plurality of data streams relating to a specific service provided to the mobile terminal, said mobile terminal being associated with a home network (108), said home network and said first and second foreign networks being linked with each other, said computer program product comprising computer executable instructions, said instructions being adapted to performing the steps:
- detecting the handover of the mobile terminal;
- sending a first message (140) for each data stream of the plurality of data streams to a first foreign agent (116) in response to the detection of the handover, said first foreign agent being hosted by the first foreign network, said first message indicating to the first foreign agent that further data packets (132,...,138) of the corresponding data stream of the plurality of data streams in the data traffic will be sent from the home network to a second foreign agent of the second foreign network, said first message (140) being further routed by the first foreign agent to the second foreign agent, the first foreign agent establishing a tunnel for tunneling received data packets of the data streams to the second foreign agent;
- sending further data packets (136, 138) of the data traffic to the second foreign agent, the second foreign agent synchronizing data packets of the data streams received through the tunnel from the first foreign agent and data packets of the data streams aimed directly at the second foreign agent for each service independently ensuring that a certain quality of service is provided for each service to the mobile terminal during the handover.

7. A network component (114) for providing data integrity for data traffic (130) for a mobile terminal (102) during handover of the mobile terminal from a first foreign network (104) to a second foreign network (106), the data traffic comprising a plurality of data streams, each data stream of the plurality of data streams relating to a specific service provided to the mobile terminal, said mobile terminal being associated with a home network (108), said home network and said first and second foreign networks being linked with each other, said network component (114) being comprised in the home network, said network component comprising:
- means for detecting the handover of the mobile terminal from the first foreign network to the second foreign network;
- means for sending a first message (140) for each data stream of the plurality of data streams to a first foreign agent (116) in response to the detection of the handover, said first foreign agent being hosted by the first foreign network, said first message indicating to the first foreign agent that further data packets (132,...,138) of the corresponding data stream of the plurality of data streams in the data traffic will be sent to the second foreign network, the first foreign agent establishing a tunnel for tunneling received data packets of the data streams to the second foreign agent;
- means for sending further data packets (136, 138) of the data traffic (130) to the second foreign network, the second foreign agent synchronizing data packets of the data streams received through the tunnel from the first foreign agent and data packets of the data streams aimed directly at the second foreign agent for each service independently ensuring that a certain quality of service is provided for each service to the mobile terminal during the handover.

## Patentansprüche

1. Ein Verfahren zum Bereitstellen von Datenintegrität für Datenverkehr (130) für ein mobiles Endgerät (102) während eines Handovers des mobilen Endgeräts von einem ersten Fremdnetz (104) an ein zweites Fremdnetz (106), wobei der Datenverkehr eine Vielzahl von Datenströmen umfasst, wobei jeder Datenstrom der Vielzahl von Datenströmen einen spezifischen für das mobile Endgerät bereitgestellten Dienst betrifft, wobei das besagte mobile Endgerät mit einem Heimatagenten (114) eines Heimatnetzes (108) assoziiert ist, wobei das besagte Heimatnetz und das besagte erste und das besagte zweite Fremdnetz miteinander verknüpft sind, wobei der besagte Heimatagent für das Ausführen des Verfahrens ausgelegt ist, wobei das Verfahren umfasst:
- Erkennen des Handovers des mobilen Endgeräts;
- Senden, Im Anschluss an das Erkennen des Handovers, einer ersten Nachricht (140) für jeden Datenstrom der Vielzahl von Datenströmen von dem besagten Heimatagenten an einen ersten Fremdagenten (116), wobei der besagte erste Fremdagent vom ersten Fremdnetz gehosted wird, wobei die besagte erste Nachricht dem ersten Fremdagenten anzeigt, dass weitere Datenpakete (132, ..., 138) des entsprechenden Datenstroms der Vielzahl von Datenströmen im Datenverkehr an einen zweiten Fremdagenten des zweiten Fremdnetzes gesendet werden, wobei die besagte erste Nachricht (140) ebenfalls von dem besagten ersten Fremdagenten an den zweiten Fremdagenten weitergeleitet wird, wobei der erste Fremdagent einen Tunnel zum Tunneln der empfangenen Datenpakete der Datenströme an den zweiten Fremdagenten einrichtet;
- Senden von weiteren Datenpaketen (136, 138) des Datenverkehrs an den zweiten Fremdagenten, wobei der zweite Fremdagent die Datenpakete der Datenströme, welche über einen Tunnel von dem ersten Fremdagenten empfangen werden, und Datenpakete der Datenströme, welche direkt an den zweiten Fremdagenten gerichtet sind, für jeden Dienst unabhängig synchronisiert, um sicherzustellen, dass für jeden Dienst eine bestimmte Dienstgüte für das mobile Endgerät während des Handovers bereitgestellt wird.

2. Das Verfahren nach Anspruch 1. wobei eine Registrierungsanforderung (164) des mobilen Endgeräts am Heimatagenten (114) empfangen wird, wobei die Registrierungsanforderung dem Heimatagenten anzeigt, dass das mobile Endgerät über das zweite Fremdnetz mit dem besagten Netzwerk verbunden ist, und wobei das Handover aufgrund des Empfangs der Registrierungsanforderung erkannt wird.

3. Das Verfahren nach Anspruch 1, wobei das Verfahren weiterhin umfasst:
- Empfangen einer zweiten Nachricht vom zweiten Fremdnetz (106), wobei die zweite Nachricht anzeigt, dass die erste Nachricht empfangen wurde;
- Freigeben eines Tunnels (168) zwischen dem zweiten Fremdnetz und dem ersten Fremdnetz (104), wobei der Tunnel zum Senden von Datenverkehr (130) vom ersten Fremdnetz an das zweite Fremdnetz (106) eingerichtet wird.

4. Das Verfahren nach Anspruch 1, wobei die erste Nachricht (140) eine im mobilen Internet-Protokoll implementierte Steuernachricht ist.

5. Das Verfahren nach Anspruch 1, wobei die erste Nachricht eine In-Band-Nachricht ist, oder wobei die erste Nachricht eine Out-Band-Nachricht ist.

6. Ein Computer-Programmprodukt zum Bereitstellen von Datenintegrität für Datenverkehr (130) für ein mobiles Endgerät (102) während eines Handovers des mobilen Endgeräts von einem ersten Fremdnetz (104) an ein zweites Fremdnetz (106), wobei der Datenverkehr eine Vielzahl von Datenströmen umfasst, wobei jeder Datenstrom der Vielzahl von Datenströmen einen spezifischen für das mobile Endgerät bereitgestellten Dienst betrifft, wobei das besagte mobile Endgerät mit einem Heimatnetz (108) assoziiert ist, wobei das besagte Heimatnetz und das besagte erste und das besagte zweite Fremdnetz miteinander verknüpft sind, wobei das besagte Computer-Programmprodukt computerausführbare Anweisungen enthält, wobei die besagten Anweisungen für das Ausführen der folgenden Schritte geeignet sind:
- Erkennen des Handovers des mobilen Endgeräts;
- Senden, Im Anschluss an das Erkennen des Handovers, einer ersten Nachricht (140) für jeden Datenstrom der Vielzahl von Datenströmen an einen ersten Fremdagenten (116), wobei der besagte erste Fremdagent von dem ersten Fremdnetz gehosted wird, wobei die besagte erste Nachricht dem ersten Fremdagenten anzeigt, dass weitere Datenpakete (132, ..., 138) des entsprechenden Datenstroms der Vielzahl von Datenströmen im Datenverkehr vom Heimatnetz an einen zweiten Fremdagenten des zweiten Fremdnetzes gesendet werden, wobei die besagte erste Nachricht (140) ebenfalls von dem besagten ersten Fremdagenten an den zweiten Fremdagenten weitergeleitet wird, wobei der erste Fremdagent einen Tunnel zum Tunneln der empfangenen Datenpakete der Datenströme an den zweiten Fremdagenten einrichtet;
- Senden von weiteren Datenpaketen (136, 138) des Datenverkehrs an den zweiten Fremdagenten, wobei der zweite Fremdagent die Datenpakete der Datenströme, welche über den Tunnel von dem ersten Fremdagenten empfangen werden, und Datenpakete der Datenströme, welche direkt an den zweiten Fremdagenten gerichtet sind, für jeden Dienst unabhängig synchronisiert, um sicherzustellen, dass für jeden Dienst eine bestimmte Dienstgüte für das mobile Endgerät während des Handovers bereitgestellt wird.

7. Eine Netzwerkkomponente (114) zum Bereitstellen von Datenintegrität für Datenverkehr (130) für ein mobiles Endgerät (102) während eines Handovers des mobilen Endgeräts von einem ersten Fremdnetz (104) an ein zweites Fremdnetz (106), wobei der Datenverkehr eine Vielzahl von Datenströmen umfasst, wobei jeder Datenstrom der Vielzahl von Datenströmen einen spezifischen für das mobile Endgerät bereitgestellten Dienst betrifft, wobei das besagte mobile Endgerät mit einem Heimatnetz (108) assoziiert ist, wobei das besagte Heimatnetz und das besagte erste und das besagte zweite Fremdnetz miteinander verknüpft sind, wobei die besagte Netzwerkkomponente in dem Heimatnetz enthalten ist, wobei die besagten Netzwerkkomponente umfasst:
- Mittel zum Erkennen des Handovers des mobilen Endgeräts von dem ersten Fremdnetz an das zweite Fremdnetz;
- Mittel zum Senden, im Anschluss an das Erkennen des Handovers, einer ersten Nachricht (140) für jeden Datenstrom der Vielzahl von Datenströmen an einen ersten Fremdagenten (116), wobei der besagte erste Fremdagent von dem ersten Fremdnetz gehosted wird, wobei die besagte erste Nachricht dem ersten Fremdagenten anzeigt, dass weitere Datenpakete (132, ..., 138) des entsprechenden Datenstroms der Vielzahl von Datenströmen im Datenverkehr an das zweite Fremdnetz gesendet werden, wobei der erste Fremdagent einen Tunnel zum Tunneln der empfangenen Datenpakete der Datenströme an den zweiten Fremdagenten einrichtet;
- Mittel zum Senden von weiteren Datenpaketen (136, 138) des Datenverkehrs (130) an das zweite Fremdnetz, wobei der zweite Fremdagent die Datenpakete der Datenströme, welche über den Tunnel von dem ersten Fremdagenten empfangen werden, und Datenpakete der Datenströme, welche direkt an den zweiten Fremdagenten gerichtet sind, für jeden Dienst unabhängig synchronisiert, um sicherzustellen, dass für jeden Dienst eine bestimmte Dienstgüte für das mobile Endgerät während des Handovers bereitgestellt wird.

## Revendications

1. Procédé de fourniture d'intégrité des données d'un trafic de données (130) pour un terminal mobile (102) pendant le transfert du terminal mobile d'un premier réseau étranger (104) à un second réseau étranger (106), le trafic de données comprenant une pluralité de flux de données, chaque flux de données de la pluralité de flux de données étant associé à un service spécifique fourni au terminal mobile, ledit terminal mobile étant associé à un agent domestique (114) d'un réseau domestique (108), ledit réseau domestique et lesdits premier et second réseaux étrangers étant reliés les uns aux autres, ledit agent domestique étant adapté pour exécuter le procédé, ledit procédé comprenant :
- la détection du transfert du terminal mobile ;
- l'envoi d'un premier message (140) pour chaque flux de données de la pluralité de flux de données dudit agent domestique à un premier agent étranger (118) en réponse à la détection du transfert, ledit premier agent étranger étant logé par le premier réseau étranger, ledit premier message indiquant au premier agent étranger que des paquets de données supplémentaires (132, ..., 138) du flux de données correspondant de la pluralité de flux de données dans le trafic de données vont être envoyés à un second agent étranger du second réseau étranger, ledit premier message (140) étant en outre acheminé par le premier agent étranger vers le second agent étranger, le premier agent étranger établissant un tunnel pour tunnelliser les paquets de données reçus des flux de données vers le second agent étranger ;
- l'envoi de paquets de données supplémentaires (136, 138) du trafic de données au second agent étranger, le second agent étranger synchronisant les paquets de données des flux de données reçus par le tunnel en provenance du premier agent étranger et les paquets de données des flux de données envoyés directement au second agent étranger pour chaque service, assurant de manière indépendante qu'un certain niveau de qualité est offert pour chaque service au terminal mobile durant le transfert.

2. Procédé selon la revendication 1, dans lequel une demande d'enregistrement (164) provenant du terminal mobile est reçue par l'agent domestique (114), dans lequel la demande d'enregistrement indique à l'agent domestique que le terminal mobile est lié audit réseau via le second réseau étranger, et dans lequel le transfert est détecté grâce à la réception de la demande d'enregistrement.

3. Procédé selon la revendication 1, dans lequel le procédé comprend en outre les étapes de :
- recevoir un second message depuis le second réseau étranger (106), ledit second message indiquant que le premier message a été reçu ;
- libérer un tunnel (168) entre le second réseau étranger et le premier réseau étranger (104), dans lequel le tunnel est établi pour envoyer le trafic de données (130) du premier réseau étranger au second réseau étranger (106).

4. Procédé selon la revendication 1, dans lequel le premier message (140) est un message de commande mis en oeuvre dans le protocole Internet mobile.

5. Procédé selon la revendication 1, dans lequel le premier message est un message intrabande ou dans lequel le premier message est un message hors bande.

6. Produit de programme informatique pour fournir l'intégrité des données d'un trafic de données (130) pour un terminal mobile (102) pendant le transfert du terminal mobile d'un premier réseau étranger (104) à un second réseau étranger (106), le trafic de données comprenant une pluralité de flux de données, chaque flux de données de la pluralité de flux de données étant associé à un service spécifique fourni au terminal mobile, ledit terminal mobile étant associé à un réseau domestique (108), ledit réseau domestique et lesdits premier et second réseaux étrangers étant reliés les uns aux autres, ledit produit de programme informatique comprenant des instructions exécutables par ordinateur, lesdites instructions étant adaptées pour exécuter les étapes de :
- détecter le transfert du terminal mobile ;
- envoyer un premier message (140) pour chaque flux de données de la pluralité de flux de données à un premier agent étranger (116) en réponse à la détection du transfert, ledit premier agent étranger étant logé par le premier réseau étranger, ledit premier message indiquant au premier agent étranger que des paquets de données supplémentaires (132, ..., 138) du flux de données correspondant de la pluralité de flux de données dans le trafic de données vont être envoyés du réseau domestique à un second agent étranger du second réseau étranger, ledit premier message (140) étant en outre acheminé par le premier agent étranger vers le second agent étranger, le premier agent étranger établissant un tunnel pour tunnelliser les paquets de données reçus des flux de données vers le second agent étranger ;
- envoyer des paquets de données supplémentaires (136, 138) du trafic de données au second agent étranger, le second agent étranger synchronisant les paquets de données des flux de données reçus par le tunnel en provenance du premier agent étranger et les paquets de données des flux de données envoyés directement au second agent étranger pour chaque service, assurant de manière indépendante qu'un certain niveau de qualité est offert pour chaque service au terminal mobile durant le transfert.

7. Composant de réseau (114) pour fournir l'intégrité des données d'un trafic de données (130) pour un terminal mobile (102) pendant le transfert du terminal mobile d'un premier réseau étranger (104) à un second réseau étranger (106), le trafic de données comprenant une pluralité de flux de données, chaque flux de données de la pluralité de flux de données étant associé à un service spécifique fourni au terminal mobile, ledit terminal mobile étant associé à un réseau domestique (108), ledit réseau domestique et lesdits premier et second réseaux étrangers étant reliés les uns aux autres, ledit composant de réseau (114) étant compris dans le réseau domestique, ledit composant de réseau comprenant :
- moyens pour détecter le transfert du terminal mobile du premier réseau étranger au second réseau étranger ;
- moyens pour envoyer un premier message (140) pour chaque flux de données de la pluralité de flux de données à un premier agent étranger (116) en réponse à la détection du transfert, ledit premier agent étranger étant logé par le premier réseau étranger, ledit premier message indiquant au premier agent étranger que des paquets de données supplémentaires (132, ..., 138) du flux de données correspondant de la pluralité de flux de données dans le trafic de données vont être envoyés au second réseau étranger, le premier agent étranger établissant un tunnel pour tunnelliser les paquets de données reçus des flux de données vers le second agent étranger ;
- moyens pour envoyer des paquets de données supplémentaires (136, 138) du trafic de données (130) au second réseau étranger, le second agent étranger synchronisant les paquets de données des flux de données reçus par le tunnel en provenance du premier agent étranger et les paquets de données des flux de données envoyés directement au second agent étranger pour chaque service, assurant de manière indépendante qu'un certain niveau de qualité est offert pour chaque service au terminal mobile durant le transfert.
